# EUROPEAN PATENT APPLICATION

(11) **EP 4 082 337 A1**
(43) Date of publication of application: **02.11.2022**
(21) Application number: 21460026.4
(22) Date of filing: 12.05.2021
(51) Int. Cl.: A01M 29/10, A01M 29/16

(54) **BIRD DETERRING SYSTEM WITH UAV**

(30) Priority: 26.04.2021 PL 43771821
(71) Applicant: Hexited Spólka Z Ograniczona Odpowiedzialnoscia, 35-060 Rzeszów (PL)
(72) Inventor: Karolonek, Filip, 30-701 Kraków (PL); Zarnowski, Maciej, 31-153 Kraków (PL)

(57) **Abstract**

System is characterized by that its landing site (8) is in the form of a horizontal platform for take-off and landing of the unmanned aerial vehicle (7), located next to the vertically positioned handling modules (6), seated vertically sliding with access to one of them. In a state after detection of birds (1) with the vision system (3) in the restricted area (2) the UAV (7) is slide out by the handling module (6) from the docking station (12) and placed on the landing site (8) in order to start the take-off procedure of the UAV (7). After take-off, the UAV (7) is moved with a flight path chosen by the system over the restricted area (2) and back to the landing site (8). In the state after the UAV (7) has landed on the landing site (8) and its slide together with UAV (7) to the selected handling module (6), the UAV (7) is moved and connected by the handling module (6) to the docking station (12) placed inside the handling module (6) for the charging of battery (9). In order to deterring birds (1) for each flight of the UAV (7) various algorithms for determining individual flight paths of the UAV (7) are used in the system, imitating the real behavior of birds of prey, combined with the emission of sound and light signals at the selected points of the UAV (7) flight path.

## Description

Autonomous bird deterrent system from the restricted area, equipped with a vision system, a ground station, a computing unit, modules for handling of unmanned aerial vehicles (UAV), a landing site for UAV's and at least one UAV.

Agriculture has always dealt with the problem of the destruction of crops by birds. In order to deterrent birds from the restricted area, such as farmlands or orchards, historically, methods aimed at scaring birds have been used, such as the placement of artificial human silhouettes in the restricted areas, so called scarecrows. One of the basic and the most widespread defense mechanisms against predation among animals is an escape. In order to be able to efficiently escape from a predator's attack, the animal must notice the predator in advance in order to successfully escape. Among birds, the sense of sight is a key sense in this process. They have the ability to perceive very well from a long distance. Due to the position of the eyes on both sides of the head, the viewing angle can be as high as 300° in most bird species. Birds are also able to perfectly capture the silhouettes of predators that may threaten them, after noticing which, even at a great distance, they immediately react with anxiety and readiness to run away. These types of adaptations among birds were utilized for human use to scare them off, by hanging models of birds of prey in flight on crops or by placing them on glasses to prevent collisions. Bird deterrent systems equipped with vision systems and the use of UAV's equipped with deterrent systems are also known in the current state of the art.

From the US 2019152595 A1 application, it is known an apparatus for sustained surveillance and/or deterrence of animals, such as birds, from an area, comprising one or more unmanned aerial vehicles ("UAVs") controlled autonomously or remotely or with minimal human intervention and having a plurality of deterrence capabilities, including but not limited to flight path changes, movement changes, flight speed changes, visual projections and audio projections.

From the US 2020156784 A1 application, there are known systems and methods for effectively repelling pest animals (e.g., birds), including drones that adopt complex deterrent strategies (e.g., cooperative strategies), establishing a fuzzy boundary for a geofenced area and altering pest deterrent device flight patterns based on the characteristics of the fuzzy boundaries. Deterrence strategies can be selected based on the type of pest animals, and new deterrence strategies can be generated based on outcome feedback from previous strategies (e.g., combining aspects of preexisting deterrence strategies by utilizing an AI system).

From the US 2018064094 A1 application, there are known methods and systems of defending a crop-containing area against crop-damaging pests include an unmanned aerial vehicle including a sensor that detects one or more pests in the crop-containing area and an output device configured to eliminate the pest from the crop-containing area. One or more docking stations configured to accommodate the UAV are provided. A computing device configured to communicate with the UAV and the docking station over a network is provided.

From the US 10856542 B2 patent document, there are known systems and methods for deterring avian species from approaching a sensitive area. A determination is made that a bird is approaching a sensitive area. A predefined flight path is selected from a plurality of predefined flight paths based on the determination that the bird is approaching the sensitive area. Each of the predefined flight paths of the plurality of predefined flight paths is configured to avoid objects within the sensitive area. An unmanned aerial vehicle is instructed to traverse the predefined flight path that has been selected.

From the US 2016183514 A1 application it is known a device for frightening birds from a location. The device uses the shape or outline of a predator attached to a powered flying device to maximize the frightening effect. The powered flying device could be remote-controllable fly in a way which substantially approximates the hovering, gliding or attack of a bird of prey.

The above-mentioned existing solutions known from the state of the art, despite their high efficiency at the beginning of application, after some time no longer protect the crop due to the phenomenon of habituation of birds to the prevailing conditions. In addition, none of the existing solutions has presented an exact method of deterrence, focusing on the way birds of prey fly during hunting, which would allow for effective bird deterrence. In the closest state of the art US 2016183514 A1 the possibility of imitating some elements of the flight of birds of prey during the UAV flight, such as hovering, gliding or attack, has been revealed, however it is a manual remotely controlled system, moreover the exact details of the methods of deterrence and of the flight path that would make the flight perceived by the birds as a real threat, were not provided.

In addition, none of the solutions revealing systems consisting of a ground station and several UAV's have disclosed details of the take-off, landing and UAV handling procedures at the ground station. This is related to the problem of effective management and implementation of activities necessary to maintain several UAV's in the ground station in readiness to execute the bird deterrence process.

Autonomous bird deterrent system from the restricted area, equipped with a vision system, a ground station, a computing unit, modules for handling of unmanned aerial vehicles (UAV), a landing site for UAV's and at least one UAV, where the birds located above the restricted area are detected by the vision system through the use of image recognition algorithms, and the information about the detected birds is transferred to the computing unit, in which the position is estimated, the potential route of bird movement is anticipated and a decision is made to send the selected UAV to carry out the bird deterrent process, where the UAV is equipped with battery, light deterrents and sound deterrents, and the module for handling of UAV is equipped with docking station, in which the battery of UAV is charged during the downtime, and the ground station is equipped with landing guidance systems, according to the invention, characterized by that the landing site is in the form of a horizontal platform for take-off and landing of the UAV, located next to the vertically positioned handling modules, seated vertically sliding with access to one of them, moreover in a state after detection of birds with the vision system in the restricted area the UAV is slide out by the handling module from the docking station and placed on the landing site in order to start the take-off procedure of the UAV, and after take-off, the UAV is moved with a flight path chosen by the system over the restricted area and back to the landing site, while in the state after the UAV has landed on the landing site and its slide together with UAV to the selected handling module, the UAV is moved and connected by the handling module to the docking station placed inside the handling module for the charging of battery, wherein in order to deterring birds for each flight of the UAV various algorithms for determining individual flight paths of the UAV are used in the system, imitating the real behavior of birds of prey, combined with the emission of sound and light signals at the selected points of the UAV flight path.

Favorable the real behavior of birds such as the Peregrine Falcon is imitated in the deterrence algorithm, wherein the flight path of the UAV in the deterrence process starts with the vertical take-off of the UAV from the landing site to a maximal ceiling from 50 m to 250 m, then there is a flight towards detected birds with waving circles while maintaining the maximal ceiling, and after reaching a position above the detected birds there is a sharp lowering of the flight ceiling (in peak flight) simulating an attack by a predator while triggering light deterrence and sound deterrence, then there is a return to the maximal ceiling and return towards the ground station with waving circles while maintaining the maximal ceiling, and after arrival above the ground station the landing process takes place.

Further benefits are obtained, while the real behavior of birds such as the Northern Goshawk is imitated in the deterrence algorithm, wherein the flight path of the UAV in the deterrence process starts with the vertical take-off of the UAV from the landing site to a safety for the flight minimal ceiling, then there is a flight towards detected birds while maintaining the minimal ceiling and maximal safety velocity of the UAV and triggering the light deterrence and the sound deterrence, and after reaching a position of the detected birds there is an elevation of flight altitude to the maximal ceiling and execution of few circular flights over the restricted area, then there is a return towards the ground station with waving circles while maintaining the maximal ceiling, and after arrival above the ground station the landing process takes place.

Further benefits are obtained, if the selection of the UAV, being in the ground station is executed by the computing unit of the system on the basis of monitored parameters of the state of charge of its battery, wherein the UAV having a sufficient amount of energy needed to perform the deterrent mission is selected, moreover the deterrence algorithms are randomized by the machine learning algorithms implemented in the computing unit of the system, while the selection of the deterrence algorithm is executed by the computing unit of the system based on the data related to the history of UAV's flights.

Next benefits are obtained, if the system is placed at a distance from the restricted area, and its vision system is placed on the tower at a height enabling a visual preview of this restricted area.

Basing various bird deterrence algorithms on special flight paths reflecting the real behavior of birds of prey, combined with the emission of sound and light signals is a large scaring stimulus for birds not known before in the state of the art - compared to deterrence methods based only on the emission of sound and/or light signals and generic flight trajectories (zigzag, circular, quilting).

Thanks to the randomization of the deterrence algorithms by the machine learning algorithms implemented in the computing unit of the system and the selection of the deterrence algorithm based on the data related to the history of UAV's flights, their uniqueness and diversity is ensured, thanks to which the possibility of habituation of birds to the used deterrent system is reduced.

The final phases of flights in deterrence algorithms reflect the real behavior of birds of prey after an unsuccessful attack. These birds usually patrol the area for a while before leaving it. Circulating over the plantation area at the maximal ceiling may additionally deter birds in the vicinity of the guarded area, signaling the presence of a predator making a patrol flight in search for a new prey.

Thanks to the using of the mobile landing site and the UAV take-off and landing procedure associated with its use, as well as the selection of the UAV, being in the ground station to perform a deterrent mission, on the basis of monitored parameters of the state of charge of its battery, an effective method of UAV management is provided.

Thanks to the location of the autonomous bird deterrent system at a distance from the restricted area, it is possible for the UAV to reach the restricted area from different directions, which helps to prevent the occurrence of bird habituation to the prevailing conditions.

The autonomous bird deterrent system according to the invention is explained in more detail in the drawing, on which the figures from 1 to 3 present the system in the embodiments, wherein the fig. 1 shows the components of the system, the fig. 2 - the bird deterrence algorithm imitating the real behavior of birds such as the Peregrine Falcon, and the fig. 3 - the bird deterrence algorithm imitating the real behavior of birds such as the Northern Goshawk.

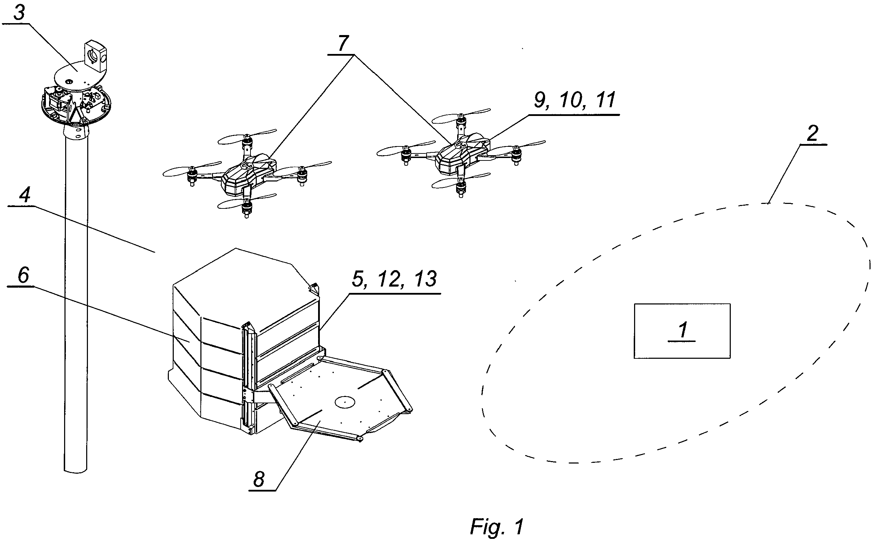

The autonomous bird 1 deterrent system from the restricted area 2 according to the invention presented in the fig. 1 in the embodiment, is equipped with the vision system 3, the ground station 4, the computing unit 5, the modules 6 for handling of unmanned aerial vehicles (UAV) 7, the landing site 8 for the UAV's 7 and it is equipped in two UAV's 7. The system is placed at a distance from the restricted area 2 and its vision system 3 is placed on the tower at a height enabling a visual preview of this restricted area 2. The birds 1 located above the restricted area 2 are detected by the vision system 3 through the use of image recognition algorithms. The information about the detected birds 1 is transferred to the computing unit 5, in which the position is estimated, the potential route of bird 1 movement is anticipated and a decision is made to send the selected UAV 7 to carry out the bird 1 deterrent process. The UAV 7 is equipped with battery 9, light deterrents 10 and sound deterrents 11. The module 6 for handling of UAV 7 is equipped with the docking station 12, in which the battery 9 of UAV is charged during the downtime. The ground station 4 is equipped with landing guidance system 13. The selection of the UAV 7, being in the ground station 4 is executed by the computing unit 5 of the system on the basis of monitored parameters of the state of charge of its battery 9, wherein the UAV 7 having a sufficient amount of energy needed to perform the deterrent mission is selected. During the start procedure, the landing site 8 is moved to the selected UAV 7 handling module 6 and the UAV 7 is placed by the handling module 6 on the landing site 8 in order to start the take-off procedure of the UAV 7. In the state after the UAV 7 has landed on the landing site 8, it is moved to the selected handling module 6 and the UAV 7 is connected to the docking station 12.

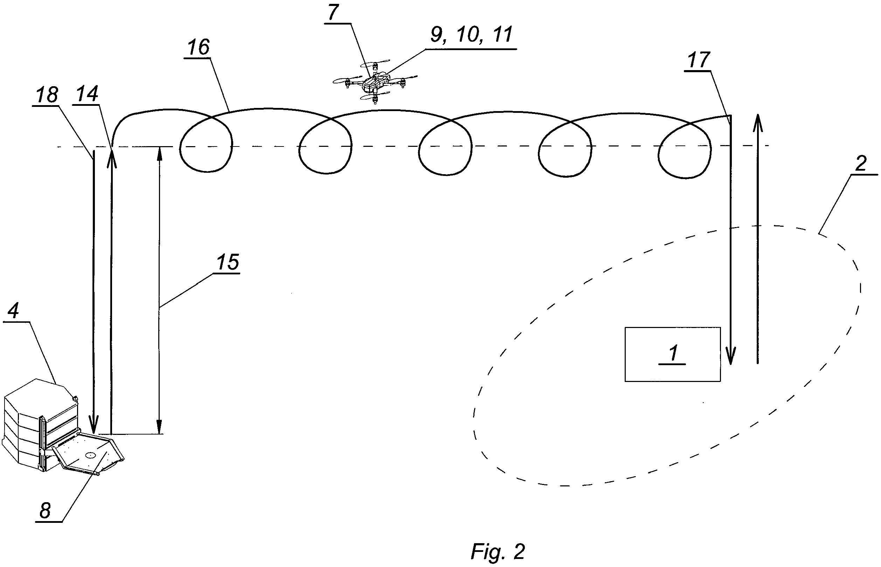

The bird 1 deterrent algorithm from the restricted area 2 presented in the fig. 2 the real behavior of birds such as the Peregrine Falcon is imitated. The deterrent process starts with the vertical take-off 14 of the UAV 7 from the landing site 8 to a maximal ceiling 15 of 100 m. Then there is a flight 16 towards detected birds 1 with waving circles while maintaining the maximal ceiling 15. After reaching a position above the detected birds 1 there is a sharp lowering 17 of the flight ceiling (in peak flight) simulating an attack by a predator while triggering light deterrence 10 and sound deterrence 11. Then there is a return to the maximal ceiling 15 and return towards the ground station 4 with waving circles while maintaining the maximal ceiling 15, and after arrival above the ground station 4 the landing process 18 takes place.

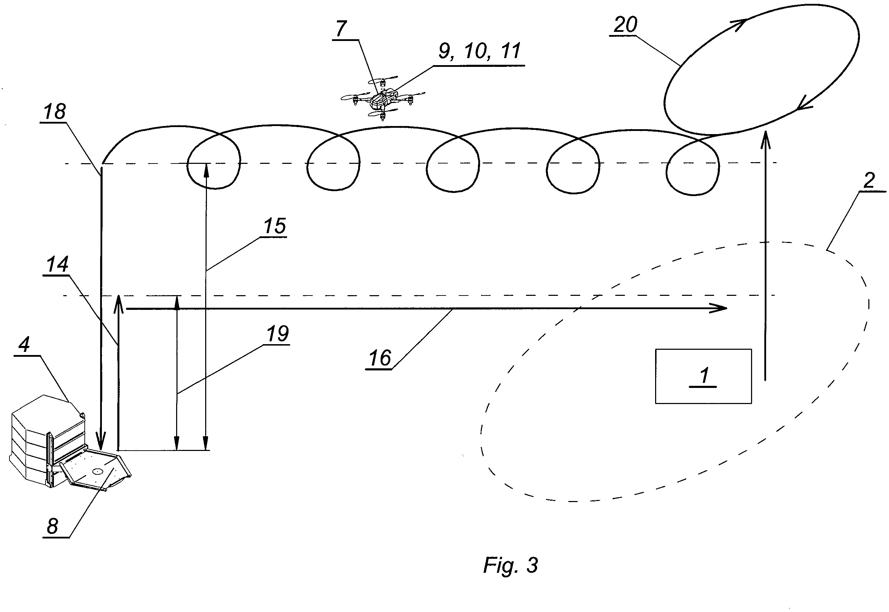

In another bird 1 deterrent algorithm from the restricted area 2 presented in the fig. 3 the real behavior of birds such as the Northern Goshawk is imitated, wherein the deterrent process starts with the vertical take-off 14 of the UAV 7 from the landing site 8 to a safety for the flight minimal ceiling 19. Then there is a flight 16 towards detected birds 1 while maintaining the minimal ceiling 19 and maximal safety velocity of the UAV 7 and triggering the light deterrence 10 and the sound deterrence 11. After reaching a position of the detected birds 1 there is an elevation of flight altitude to the maximal ceiling 15 and execution of few circular flights 20 over the restricted area 2. Then there is a return towards the ground station 4 with waving circles while maintaining the maximal ceiling 15, and after arrival above the ground station 4 the landing process 18 takes place.

### List of designations

1 - birds
2 - restricted area
3 - vision system
4 - ground station
5 - computing unit
6 - handling module
7 - UAV
8 - landing site
9 - battery
10 - light deterrence
11 - sound deterrence
12 - docking station
13 - landing guidance system
14 - take-off
15 - maximal ceiling
16 - flight
17 - lowering
18 - landing process
19 - minimal ceiling
20 - circular flight

## Claims

1. Autonomous bird deterrent system from the restricted area, equipped with a vision system, a ground station, a computing unit, modules for handling of unmanned aerial vehicles (UAV), a landing site for UAV's and at least one UAV, where the birds located above the restricted area are detected by the vision system through the use of image recognition algorithms, and the information about the detected birds is transferred to the computing unit, in which the position is estimated, the potential route of bird movement is anticipated and a decision is made to send the selected UAV to carry out the bird deterrent process, where the UAV is equipped with battery, light deterrents and sound deterrents, and the module for handling of UAV is equipped with docking station, in which the battery of UAV is charged during the downtime, and the ground station is equipped with landing guidance systems, **characterized by that** the landing site (8) is in the form of a horizontal platform for take-off and landing of the UAV (7), located next to the vertically positioned handling modules (6), seated vertically sliding with access to one of them, moreover in a state after detection of birds (1) with the vision system (3) in the restricted area (2) the UAV (7) is slide out by the handling module (6) from the docking station (12) and placed on the landing site (8) in order to start the take-off procedure of the UAV (7), and after take-off, the UAV (7) is moved with a flight path chosen by the system over the restricted area (2) and back to the landing site (8), while in the state after the UAV (7) has landed on the landing site (8) and its slide together with UAV (7) to the selected handling module (6), the UAV (7) is moved and connected by the handling module (6) to the docking station (12) placed inside the handling module (6) for the charging of battery (9), wherein in order to deterring birds (1) for each flight of the UAV (7) various algorithms for determining individual flight paths of the UAV (7) are used in the system, imitating the real behavior of birds of prey, combined with the emission of sound and light signals at the selected points of the UAV (7) flight path.

2. The system according to the claim 1, **characterized by that** the real behavior of birds such as the Peregrine Falcon is imitated in the deterrence algorithm, wherein the flight path of the UAV (7) in the deterrence process starts with the vertical take-off (14) of the UAV (7) from the landing site (8) to a maximal ceiling (15) from 50 m to 250 m, then there is a flight (16) towards detected birds (1) with waving circles while maintaining the maximal ceiling (15), and after reaching a position above the detected birds (1) there is a sharp lowering (17) of the flight ceiling (in peak flight) simulating an attack by a predator while triggering light deterrence (10) and sound deterrence (11), then there is a return to the maximal ceiling (15) and return towards the ground station (4) with waving circles while maintaining the maximal ceiling (15), and after arrival above the ground station (4) the landing process (18) takes place.

3. The system according to the claim 1, **characterized by that** the real behavior of birds such as the Northern Goshawk is imitated in the deterrence algorithm, wherein the flight path of the UAV (7) in the deterrence process starts with the vertical take-off (14) of the UAV (7) from the landing site (8) to a safety for the flight minimal ceiling (19), then there is a flight (16) towards detected birds (1) while maintaining the minimal ceiling (19) and maximal safety velocity of the UAV (7) and triggering the light deterrence (10) and the sound deterrence (11), and after reaching a position of the detected birds (1) there is an elevation of flight altitude to the maximal ceiling (15) and execution of few circular flights (20) over the restricted area (2), then there is a return towards the ground station (4) with waving circles while maintaining the maximal ceiling (15), and after arrival above the ground station (4) the landing process (18) takes place.

4. The system according to the one of the claims from 1 to 3, **characterized by that** the selection of the UAV (7), being in the ground station (4) is executed by the computing unit (5) of the system on the basis of monitored parameters of the state of charge of its battery (9), wherein the UAV (7) having a sufficient amount of energy needed to perform the deterrent mission is selected.

5. The system according to the one of the claims from 1 to 4, **characterized by that** the deterrence algorithms are randomized by the machine learning algorithms implemented in the computing unit (5) of the system.

6. The system according to the one of the claims from 1 to 5, **characterized by that** the selection of the deterrence algorithm is executed by the computing unit (5) of the system based on the data related to the history of UAV's (7) flights.

7. The system according to the one of the claims from 1 to 6, **characterized by that** it is placed at a distance from the restricted area (2), and its vision system (3) is placed on the tower at a height enabling a visual preview of this restricted area (2).

## Amended claims

### Amended claims in accordance with Rule 137(2) EPC.

1. Autonomous bird deterrent system from the restricted area, which utilizes a vision system, a ground station, a computing unit, modules for handling of unmanned aerial vehicles (UAV), a landing site for UAV's and at least one UAV, where the vision system detects the birds located above the restricted area through the use of image recognition algorithms, and transfers the information about the detected birds to the computing unit, which estimates the position, anticipates the potential route of bird movement and makes a decision to send the selected UAV to carry out the bird deterrent process, where the UAV is equipped with battery, light deterrents and sound deterrents, and the module for handling of UAV is equipped with docking station, which charges the battery of UAV during the downtime, and the ground station utilizes landing guidance systems, **characterized by that** the system utilizes the landing site (8) in the form of a horizontal platform for take-off and landing of the UAV (7), located next to the vertically positioned handling modules (6), seated vertically sliding with access to one of them, moreover after the vision system (3) detects the birds (1) in the restricted area (2), the handling module (6) slides out the UAV (7) from the docking station (12) and places the UAV (7) on the landing site (8) in order to start the take-off procedure of the UAV (7), and after take-off, the UAV (7) moves with a flight path chosen by the system over the restricted area (2) and back to the landing site (8), while after the UAV (7) lands on the landing site (8) and the landing site (8) slides together with the UAV (7) to the selected handling module (6), the handling module (6) moves and connects the UAV (7) to the docking station (12) placed inside the handling module (6) for the charging of battery (9), wherein in order to deterring birds (1) for each flight of the UAV (7) the system uses various algorithms for determining individual flight paths of the UAV (7), imitating the real behavior of birds of prey, combined with the emission of sound and light signals at the selected points of the UAV (7) flight path.

2. The system according to the claim 1, **characterized by that** the system imitates the real behavior of birds such as the Peregrine Falcon in the deterrence algorithm, wherein the flight path of the UAV (7) in the deterrence process starts with the vertical take-off (14) of the UAV (7) from the landing site (8) to a maximal ceiling (15) from 50 m to 250 m, then the UAV (7) flights (16) towards detected birds (1) waving circles while maintaining the maximal ceiling (15), and after reaching a position above the detected birds (1) the UAV (7) sharply lowers (17) the flight ceiling (in peak flight) simulating an attack by a predator while triggering light deterrence (10) and sound deterrence (11), then the UAV (7) returns to the maximal ceiling (15) and returns towards the ground station (4) waving circles while maintaining the maximal ceiling (15), and after arrival above the ground station (4) the UAV (7) executes the landing process (18).

3. The system according to the claim 1, **characterized by that** the system imitates the real behavior of birds such as the Northern Goshawk in the deterrence algorithm, wherein the flight path of the UAV (7) in the deterrence process starts with the vertical take-off (14) of the UAV (7) from the landing site (8) to a safety for the flight minimal ceiling (19), then the UAV (7) flights (16) towards detected birds (1) while maintaining the minimal ceiling (19) and maximal safety velocity of the UAV (7) and triggering the light deterrence (10) and the sound deterrence (11), and after reaching a position of the detected birds (1) the UAV(7) elevates the flight altitude to the maximal ceiling (15) and executes few circular flights (20) over the restricted area (2), then the UAV (7) returns towards the ground station (4) waving circles while maintaining the maximal ceiling (15), and after arrival above the ground station (4) the UAV (7) executes the landing process (18).

4. The system according to the one of the claims from 1 to 3, **characterized by that** the computing unit (5) of the system selects the UAV (7), being in the ground station (4) on the basis of monitored parameters of the state of charge of its battery (9), wherein the computing unit (5) selects the UAV (7) having a sufficient amount of energy needed to perform the deterrent mission.

5. The system according to the one of the claims from 1 to 4, **characterized by that** the computing unit (5) of the system randomizes the deterrence algorithms by using the machine learning algorithms implemented in the computing unit (5).

6. The system according to the one of the claims from 1 to 5, **characterized by that** the computing unit (5) of the system selects the deterrence algorithm basing on the data related to the history of UAV's (7) flights.
